# EUROPEAN PATENT APPLICATION

(11) **EP 1 509 019 A1**
(43) Date of publication of application: **23.02.2005**
(21) Application number: 03018864.3
(22) Date of filing: 19.08.2003
(51) Int. Cl.: H04L 29/06, H04M 7/00

(54) **User to user information exchange over session initiation protocol based networks**

(71) Applicant: SIEMENS AKTIENGESELLSCHAFT, 80333 München (DE)
(72) Inventor: Hoffmann, Klaus, 81735 München (DE); Markoulaki, Maria, Dionisos Attiki, 145-76 Attiki (GR); Perrakis, Ioannis, Bouliagmenis, 116-31 Athens (GR)

(57) **Abstract**

Exchanging user to user signaling (UUS) information over a session interface protocol (SIP) network. A mapping maps a parameter utilized for exchanging the user to user information to a session interface protocol. The user to user information is transmitted to a switch having the mapping. The switch transmits the user to user information in accordance with the mapping such that the SIP network can transfer the user to user information. A system for exchanging user to user signaling (UUS) information over a session interface protocol (SIP) network. The system includes an SIP client of the SIP network. A map maps an SIP parameter of the SIP network for exchanging the user to user information using UUS.

## Description

The present invention relates to exchange of information over a telecommunications network and, more particularly, to exchange of user to user information exchange over session internet protocol (SIP) based networks.

The Session Initiation Protocol (SIP), an Internet Engineering Task Force (IETF) standard protocol, initiates an interactive user session that involves multimedia elements such as video, voice, chat, gaming, and virtual reality. As with HTTP or SMTP, SIP works in the Application Layer of the Open Systems Interconnection (OSI) communications model. The Application layer is the level responsible for ensuring that communication is possible. SIP can establish multimedia sessions or Internet telephony calls, and modify, or terminate them. The protocol can also invite participants to unicast or multicast sessions that do not necessarily involve the initiator. Because the SIP supports name mapping and redirection services, it makes it possible for users to initiate and receive communications and services from any location, and for networks to identify the users wherever they are.

SIP is a request-response protocol, dealing with requests from clients and responses from servers. Participants are identified by *SIP URLs.* Requests can be sent through any transport protocol, such as UDP, SCTP, or TCP. SIP determines the end system to be used for the session, the communication media and media parameters, and the called party's desire to engage in the communication. Once these are assured, SIP establishes call parameters at either end of the communication, and handles call transfer and termination. The Session Initiation Protocol is specified in IETF Request for Comments [RFC] 2543.

Thus, an SIP client may be considered as an IP-Phone, supported with an SIP stack firmware or a SIP PC Client, for example. The SIP Clients are registered on a SIP server, such as a hiQ6200 Siemens TM server, which is responsible to forward all Client requests to the Packet Manager (PM) of a switch, such as the Siemens TM hiQ9200, and vice versa. The PM transforms the SIP requests and through a report interface transmits the information to an interworking program, such as the CC LTG (SIP-ISUP) of the Siemens TM hiQ9200 switch. The switch then transmits the active call to an electronic world wide switch digital (EWSD), which is coupled to, for example, to an Integrated Services Digital Network (ISDN) or public switched telephone network (PTSN).

The problem that arises in the above SIP-PSTN call is that no data transmission is supported through the signaling. EWSD supports known user to user signaling, so-called UUS1, UUS2, or UUS3. However, there has been no implementation heretofore on the switch side. There has, furthermore, been no implementation for the switching side components.

It is an object of the present invention to provide exchange of user to user information.

It is an object of the present invention to provide exchange of user to user information over an session interface protocol.

It is an object of the present invention to provide a mapping of a SIP protocol used for exchange of user to user information to UUS.

It is an object of the present invention to provide support of a call feature.

In accordance with the present invention there is provided a method for exchanging user to user signaling (UUS) information over a session interface protocol (SIP) network. A mapping maps a parameter utilized for exchanging the user to user information to a session interface protocol. The user to user information is transmitted to a switch having the mapping. The switch transmits the user to user information in accordance with the mapping such that the SIP network can transfer the user to user information.

In accordance with another aspect of the present invention, there is provided a system for exchanging user to user signaling (UUS) information over a session interface protocol (SIP) network. The system includes an SIP client of the SIP network. A map maps an SIP parameter of the SIP network for exchanging the user to user information using UUS.

The present invention shall be described with reference to the following figures. However, it should be kept in mind that the figures are merely examples:
Figure 1 illustrates the IP network of the present invention; and
Figure 2 depicts a flow diagram of the present invention.

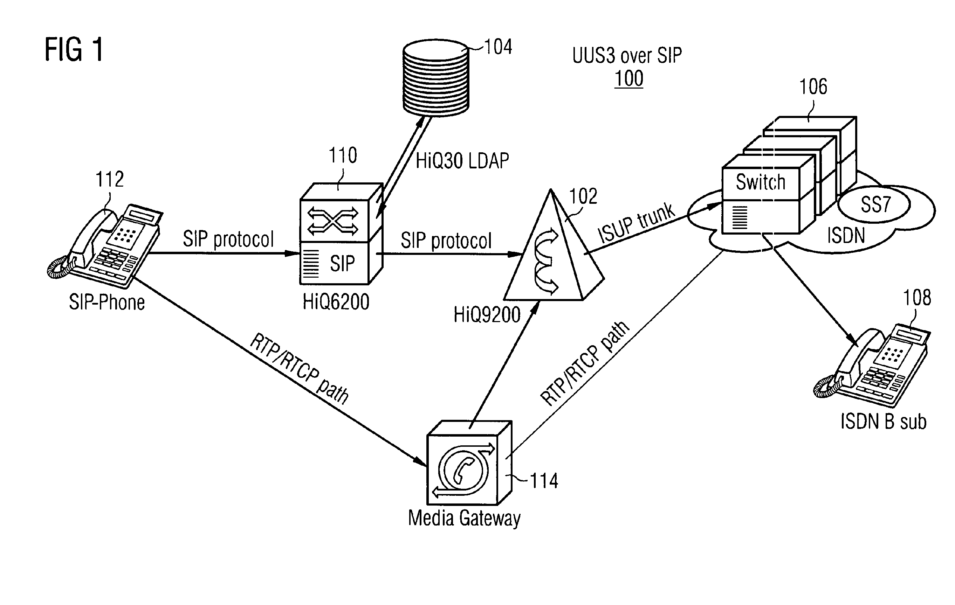

With respect to Figure 1, there is shown the exemplary network 100 that will be used to describe the present invention. The network 100 communications are coordinated by a switch 102, which may be a soft switch. The switch 102 implements control of access equipment, media gateways and resource servers and coordinates the network intelligence of the various components for carrying out these implementations.

In a telecommunications network, a switch is a device that channels incoming data from any of multiple input ports to the specific output port that will take the data toward its intended destination. In a wide area packet-switched network such as an IP network, a switch further determines from the IP address in each packet where to send the packet, e.g., the output port, to use for the next part of its trip to the intended destination.

A Directory Server 104 that manages data concerning the users is shown. The database system may be enabled using light weight directory access protocol (LDAP), a software protocol for enabling anyone to locate organizations, individuals, and other resources such as files and devices in a network, whether on the public Internet or on a corporate intranet. LDAP is a "lightweight" (smaller amount of code) version of Directory Access Protocol (DAP), which is part of X.500, a standard for directory services in a network.

An EWSD switch 106 is shown, which may be coupled to a PSTN or ISDN, coupled to the switch 102 through, for example, an ISUP trunk. These networks may support Signaling System 7 (SS7), for example. An ISDN termination point 108 is shown connected to the EWSD switch 106 which may be an ISDN telephone, for example.

A proxy and redirect server 110 may be provided to connect subscribers and domains to the network 100. In other words, it establishes calls between clients. For example, it opens new session internet protocol (SIP) based networks by providing interworking with PSTN/ Integrated Services Digital Network (ISDN) and H.323 networks. An SIP side termination point 112, which may be an SIP-phone, for example, is shown connected to the proxy and redirect server 110 using SIP.

A media gateway 114, a mediation element between circuit switched voice networks and the network 100, is provided. It is controlled by the switch 102 to relay voice, fax, modem and ISDN data traffic over the network 100. The media gateway uses trunk interfaces to interconnect with, for example, the circuit-switched voice networks 120 shown in the figure.

As an example of the operation of the invention, the SIP phone 112, as an SIP client, sends text through the SIP message functionality, such as the SIP 'MESSAGE' on SDP part. This text message is communicated using the SIP protocol to the proxy and redirect server 110 and further relayed to the switch 102. In coordination with the switch 102, the directory server checks the information in its database whether the user to user signaling over SIP feature is supported. In this instance, the switch 102 transmits the SIP clients text on USR ISUP order to the EWSD switch 106 over an ISUP trunk, for example. The SIP clients text is then forwarded by the exchange to the ISDN side termination point 108, which may be thought of as an ISDN B sub. More examples will be explained in further detail.

In order to realize the foregoing, the present invention provides for the implementation of the user to user parameters on the switch side to compliment the parameters on the EWSD side. In practice, the EWSD user to user signaling parameters include, primarily for purposes of this invention, the 'user to user information' parameter and/or the 'user to user indicator' parameter. Of course, these parameters are merely exemplary and may be another parameter or parameters. The enumerated parameters are, in practice, announced, requested and/or activated with ISUP IAM and/or ISUP Request and accepted or rejected with ISUP ACM/CPG/ANM/CON. Further, it is practice that the ISUP REL carries the user to user signaling parameters. To that end, the invention proposes the following SIP enhancements.

In the case that new content types, i.e., not known to the switch side, an appropriate mapping should be performed of the SIP messages. These may be, for example, known to the EWSD side, such as the ISUP content or the SDP content, but not known to the switch side. In addition, the same should apply to related contents corresponding to the switch side protocol discriminator for support of 'user to user information' parameter.

The present invention proposes to map the relevant protocols of the existing protocol discriminator shown in Table I below. In particular, the IA5 may be mapped to an already existing SIP content type, the SIP content type 'text/plain'. The X.244, a new content type of the switch side, is mapped to the X.244 in the protocol discriminator. The content of the user to user information is thereafter be attached. Of course, the content of the user to user information may be appended anywhere in the message. The message is transmitted in accordance with any transmission protocol ascribed to. For example, the message may be transmitted as a binary stream in the case of ISUP MIME for SIP-T.

**Table I**

| *Protocol discriminator (octet 3)* Bits | |
|---|---|
| 87654321 00000000 | User-specific protocol |
| 00000001 | OSI high layer protocols |
| 00000010 | X.244 [44] |
| 00000011 | Reserved for system management convergence function |
| 00000100 | IA5 characters |
| 00000101 | X.208 and X.209 coded user information |
| 00000111 | Rec. V.120 [9] rate adaption |
| 00001000 | Q.931/1.451 user network call control messages |
| 00010000 through 00111111} | Reserved for other network layer or layer 3 protocols, Including Recommendation X.25 [5] |
| 01000000 through 01001111} | National use |
| through 01010000 11111110} | Reserved for other network layer or layer 3 Protocols, including Redommendation X.25 |

Of course, the above table is merely exemplary and the actual mappings and/or bits may be different. Furthermore, the parameters selected for mapping may be different or in addition to those shown.

Now it shall be discussed how the invention proposes to map the new SIP header to the switch side user to user indicator and vice versa. For purposes of explanation, the 8 bit octet is keyed for each bit to the letters A-H as shown in Table II below.

**Table II**

| | | | | | | | |
|---|---|---|---|---|---|---|---|
| 8 | 7 | 6 | 5 | 4 | 3 | 2 | 1 |
| H | G | F | E | D | C | B | A |

And, according to the existing user to user indicators parameter field show in Table III below, the following codes are used.

**Table III**

| | | | |
|---|---|---|---|
| Bit | A: | | Type |
| | 0 | | request |
| | 1 | | response |
| If bit A equals 0 (request) | | | |
| Bits | C | B: | Service 1 |
| | 0 | 0 | no information |
| | 0 | 1 | spare |
| | 1 | 0 | request, not es- |
| | 1 | 1 | sential request, esential |
| Bits | E | D: | Service 2 |
| | 0 | 0 | no information |
| | 0 | 1 | spare |
| | 1 | 0 | request, not essential |
| | 1 | 1 | request, essential |
| Bits | G | F: | Service 3 |
| | 0 | 0 | no information |
| | 0 | 1 | spare |
| | 1 | 0 | request, not es- |
| | 1 | 1 | sential request, essential |
| Bit H: | | | Spare |
| If bit A equals 1 (response): | | | |
| Bits | C | B: | Service 1 |
| | 0 | 0 | no information |
| | 0 | 1 | not provided |
| | 1 | 0 | provided |
| | 1 | 1 | spare |
| Bits | E | D: | Service 2 |
| | 0 | 0 | no information |
| | 0 | 1 | not provided |
| | 1 | 0 | provided |
| | 1 | 1 | spare |
| Bits | G | F: | Service 3 |
| | 0 | 0 | no information |
| | 0 | 1 | not provided |
| | 1 | 0 | provided |
| | 1 | 1 | spare |
| Bit | H: | | |
| | 0 | | Network discard indicator |
| | | | |
| | 1 | | no information user-to-user information discarded by the network |

The invention, therefore, proposes to map the user to user information and user to user indicator parameters, as performed on the SIP-ISUP inter working program, as follows in Table IV.

**Table IV**

| **ISUP** | **SIP** |
|---|---|
| IAM | INVITE |
| ACM | 181 |
| CPG | 183 |
| ANM | 200 |
| CON | 200 |
| REL | BYE |
| REL | Negative response |
| USR | MESSAGE |
| FACILITY request | MESSAGE |
| FACILITY reject | Negative response or 200 OK to MESSAGE as triggered by FACILITY request |
| FACILITY accepted | 200 OK to MESSAGE as triggered by FACILITY request |

In the foregoing, the invention maps SIP to ISUP. However, it will be appreciated that the mapping may be extended to, for example, SIP-T, H.323, BICC, ISUP+, DSS1, etc. Of course, SIP-SIP interworking is applicable to any of the user to user versions, UUS1, UUS2, UUS3, etc.

Depending on the actual environment, modifications to the existing systems may need to be made to comport with the mapping, and that this is entirely normal to programming. For example, the Proxy and LDAP Server may be enhanced in order to allow the SIP Proxy to remove and/or add and/or alter the new SIP headers and/or new content types and/or existing types to the concerned messages depending on the user to user service. The actual modifications will depend on the actual system, such as the subscription of the involved subscribers. However, one skilled in the art will readily know how to implement the changes to the existing system.

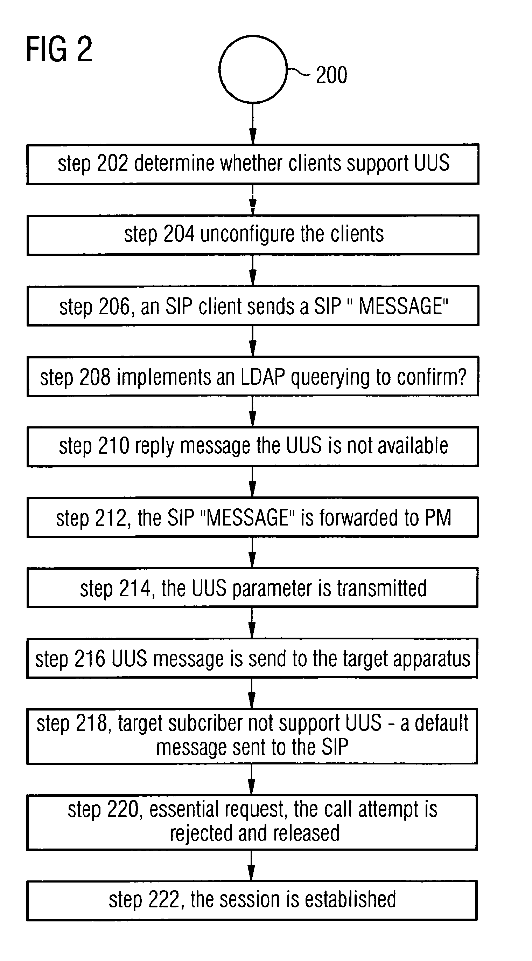

Now, in operation, the call flow of UUS over SIP as provided by the invention shall now be described with reference to the flow diagram 200 Figure 2. Once a session has been established using the invention between a SIP Client and an ISDN/PSTN subscriber the 'UUS over SIP' feature will provide the ability to exchange data through their devices, the same way it is performed between ISDN subscribers.

In the case that two clients wish to exchange text using the inventive feature, it is first determined in step 202 whether the clients are able to support UUS. The next step 204 is to unconfigure the clients from, for example, their coordination processor (not shown). Once this is complete, the UUS over SIP feature is to be assigned on the LDAP server of the switch side as follows.

In step 206, an SIP client sends a SIP 'MESSAGE' with data information (e.g. text) on the SDP part. In response to this 'MESSAGE', the switch side proxy server (110, Fig. 1) in step 208 implements an LDAP queerying on the Directory Server (104, Figure 1) in order to confirm that the SIP client has authority to use the UUS over SIP feature. If it is not the case that the SIP client has such authority, a reply message indicating that the UUS is not available is displayed in step 210 on the SIP client device.

In the case that the queerying in step 208 is successful, flow proceeds to step 212, the SIP 'MESSAGE' is forwarded to the incoming Packet Manager (PM) of the switch and, in step 214, the UUS parameter is transmitted through an ISUP order USER to the EWSD switch (106, Figure 1). In the case that the target subscriber (108, Figure 1, for example, ISDN/PSTN user) supports the UUS feature or not, the UUS message is sent in step 216 from the SIP client will be finally displayed at the target apparatus. In step 218, when the target subscriber does not support the UUS feature, a default message is generated and sent back to the SIP client. In case the call is an essential request, the call attempt is rejected and released in step 220. Thus, in step 222, the session is established and the UUS over SIP feature may be utilized to provide an exchange of data in the same manner that data is exchanged between ISDN subscribers.

The invention applies the same functionality for the TDM network UUS served user. In addition, the present invention may be applied to the situation where SIP clients are connected at remote exchanges, for example, two different switches connected through an SIP-T protocol. In this last case, the invention may be applied where the UUS message is to be sent from a SIP client and pass through the SIP-T interface to another SIP client. In this instance, the SIP-T interface encapsulates the ISUP order USER, as it normally does with all orders.

The invention shall now be described by way of examples A-E with reference to Figure 1. It shall be appreciated that these are merely examples and shall not limit the scope of the invention in any way, but that further applications or variations of the invention are within the realm of this specification.

In the Example A, the talk state of the UUS over SIP of the invention shall be described. In this case, an active call is made between an ISDN subscriber and an SIP client. The invention then establishes the protocol mapping necessary for exchanging information. The calling subscriber, i.e., the SIP client 112, sends the data, such as text data, to the switch 102. The switch retransmits the message according to the established protocol mapping, thereby making it possible to forward the message to the network of the ISDN client 108.

Example B illustrates the talk state where the B subscriber sends a message in the SIP phone direction. As in the above example, the invention establishes the protocol mapping necessary for exchanging information. In this case, the ISDN client 108 generates the data and the switch transmits it on to the SIP phone 112 in the appropriate protocol in accordance with the mapping.

The case of two SIP clients registered on different local area networks (LANs) in the talk state will now be discussed with reference to Example C. In this case, the two clients are connected through the SIP-T protocol. In case Client A or Client B send a data message to the other client, the message is transmitted to the switch 102 and provided with the correct protocol according to the inventive mapping procedure.

Example D regards the alert state in which a voice over DSL (VoDSL) subscriber calling a SIP Client. In the event that the receiving client is busy, a call waiting feature indicates that the receiving client is off-hook. According to the call waiting feature, a message is returned. In this instance, the invention provides that call waiting messages sent in SIP are properly handled according to the protocol mapping. In this manner, notification of the busy state of the called client is ensured.

In Example E, the disconnect state will be described. In this example, an SIP client that is disconnected wishes to send a message to the ISDN subscriber to call back. The call back feature generates the call back message and transmits the same to the switch 102. The invention provides that call back messages sent in SIP are properly handled according to the protocol mapping. With the invention, therefore, the callback feature is extended to the SIP environment.

It shall be appreciated that the invention is applicable to any call feature, not just those described with reference to the foregoing examples. The examples A-E are merely to provide description of suitable applications for the invention and are not meant to limit the scope of the invention in any way.

It shall be appreciated that, while the present invention has been explained with reference to the particular figures and aspects shown, the present invention is not so limited, but may in fact encompass the broader invention, as defined by the several claims.

## Claims

1. A method for exchanging user to user signaling (UUS) information over a session interface protocol (SIP) network, the method comprising the steps of:
mapping a parameter utilized for exchanging the user to user information to a session interface protocol;
transmitting the user to user information to a switch having the mapping; and
the switch transmitting the user to user information in accordance with the mapping such that the SIP network can transfer the user to user information.

2. The method of claim 1, further comprising the step of determining that clients intending to exchange the user to user information are capable of supporting UUS.

3. The method of any of the preceding claims further comprising the step of sending a message if a target client to which the user to user information is to be sent does not support UUS.

4. The method of any of the preceding claims wherein the user to user information is textual.

5. The method of any of the preceding claims, further comprising the step of generating the user to user information that relates to a call feature.

6. The method of claim 5, wherein the step of generating generates the user to user information as a call waiting message of a call waiting feature.

7. The method of claim 5, wherein the step of generating generates the user to user information as a call back message of a call back feature.

8. A system for exchanging user to user signaling (UUS) information over a session interface protocol (SIP) network, comprising:
an SIP client of the SIP network; and
a map that maps an SIP parameter of the SIP network for exchanging the user to user information using UUS.

9. The system of claim 8, further comprising a switch that transmits the user to user information to and from the SIP network.

10. The system according to claim 9, wherein the switch comprises a packetizer that packets the user to user information according to the protocol mapped by the map.

11. The system of any of the preceding claims, further comprising an ISDN network.

12. The system of claim 11, further comprising an EWSD switch coupled to the ISDN network for switching the user to user information to the ISDN network.
